# EUROPEAN PATENT APPLICATION

(11) **EP 2 360 591 A1**
(43) Date of publication of application: **24.08.2011**
(21) Application number: 10290075.0
(22) Date of filing: 16.02.2010
(51) Int. Cl.: G06F 11/07

(54) **Volatile memory content capturing method and processing system**

(71) Applicant: NXP B.V., 5656 AG Eindhoven (NL)
(72) Inventor: Watine, Alexis, Redhill Surrey RH1 1DL (GB)
(74) Representative: Williamson, Paul Lewis

(57) **Abstract**

Disclosed is a method of capturing the contents of a volatile memory (30) of a processing system (10), the processing system further comprising a non-volatile storage device (40), the method comprising providing a set of interrupt monitoring instructions for copying the content of the volatile memory into the non-volatile storage device upon occurrence of said interrupt; upon detection of the interrupt in the instruction flow of the processing system, executing the corresponding interrupt monitoring instruction from said set; and rebooting the processing system (1) following said copying. A processing system for executing the method of the present invention is also disclosed.

## Description

### FIELD OF THE INVENTION

The present invention relates to a method of capturing the contents of a volatile memory of a processing system.

The present invention further relates to such a processing system.

### BACKGROUND OF THE INVENTION

It is well-known that when designing integrated circuits, it is important to ensure that the integrated circuit (IC) operates in a fault-free manner. For this reason, rigorous testing at various stages of the IC manufacture is performed. This testing thus ensures to a high degree of certainty that the IC is structurally and functionally correct.

Unfortunately, this does not ensure that the IC will operate in a fault-free manner, for instance because software applications running on e.g. a processor of the IC may contain programming errors causing a system crash of the software system(s). It will be apparent that to the end user, this is equally unacceptable especially when the IC performs a pivotal role in ensuring the correct operation of a larger apparatus into which the IC has been integrated, for example vehicles.

Consequently, the correct operation of software running on an IC is usually verified using so-called debugging. One debug approach is to observe the operation of the software until a system crash occurs, i.e. a crash of the operating system under which the one or more software applications are running, after which the cause of the error is diagnosed by evaluation of the state of the IC directly after the crash. The state of the IC is typically defined by a plurality of data values that have been written to the volatile memory (RAM) of the IC. To this end, monitoring devices, such as a debug computer, may be attached to the IC under investigation in order to observe the RAM state following such a system crash.

The RAM state provides invaluable insights into the causes of software application system crashes, and is therefore an essential part of improving the reliability of software applications running on an IC. Unfortunately, many system crashes in fact occur in the absence of a connected monitoring device. Consequently, upon reboot of the system, the invaluable diagnostic data in the RAM is lost due to the re-initialization of the RAM at reboot. Also, a system crash may prohibit access to the RAM, with the IC only becoming responsive again after a system reboot, during which the RAM state is lost.

This may be solved by the inclusion of a so-called watchdog hardware block in the system architecture, which saves the state of the RAM to e.g. a hard disk upon detection of a hard deadlock-triggered reboot. In this context, a hard deadlock is a state in which the processor has become unresponsive. However, not all reboots are caused by deadlock conditions; for instance, a processor may have entered a state in which the processor is still fully responsive but from which no escape is possible, for instance when an application running on the processor incurs an unrecoverable error. In such a situation, the processor itself is normally capable to reboot the system in a controlled manner, such that such reboots are usually not picked up by the watchdog block. Consequently, such a 'soft-deadlock' (or application deadlock) triggered reboot results in the loss of the RAM contents upon reboot, thus denying a software developer invaluable insights into the causes of the (software application-related) reboot.

In US patent application US 2006/156057 A1, a method for preserving crash dump data in case of an operating system crash in a diskless device is proposed. The method relies on a two-stage booting procedure in which a primary and a secondary kernel are loaded. In case of a previous crash of the secondary kernel, control is handed to the primary kernel, which preserves the crash dump support data and the RAM contents of the secondary kernel by sending it to a remote system for storage on a nonvolatile memory prior to resetting the processor and RAM during boot-up.

A drawback of this approach is the requirement of two kernels, which adds to the complexity of the operating system, which in itself increases the risk of software errors being introduced due to the increased complexity.

### SUMMARY OF THE INVENTION

The present invention seeks to provide a more versatile method of capturing the contents of a volatile memory following the occurrence of an exception.

The present invention further seeks to provide a processing system implementing such a method.

According to an aspect of the present invention, there is provided a method of capturing the contents of a volatile memory of a processing system, the processing system further comprising a non-volatile storage device, the method comprising providing a set of interrupt monitoring instructions for copying the content of the volatile memory into the non-volatile storage device upon occurrence of said interrupt; upon occurrence of the interrupt in the instruction flow of the processing system, executing the corresponding interrupt handling instruction from said set; and rebooting the processing system following said copying.

It has been realized by the present inventors that upon the occurrence of an exception in the execution of instructions by a processing system such as a central processing unit (CPU) or a CPU comprising one or more co-processors, the CPU is still capable of executing further instructions such as the interrupt handlers for handling the exception. Hence, upon occurrence of the interrupt handling, the interrupt monitoring instructions are adapted to copy the contents of the volatile memory such as a RAM to a non-volatile storage device such as a flash memory or, if present, a hard disk, such that the content of the volatile memory is not lost upon rebooting the processing system.

Preferably, the method further comprises compressing the content of the volatile memory prior to copying said content into the non-volatile storage device to ensure that there is sufficient space in the non-volatile storage device for storing the content of the volatile memory. This is particularly relevant if the capacity of the volatile memory exceeds the capacity of the non-volatile storage device, e.g. in case of the non-volatile storage device being a flash memory.

The instruction set may further comprise a status checking instruction such as an assert, with the method further comprising executing a status checking instruction into the non-volatile storage device for flagging the occurrence of an interrupt in the instruction flow of the processing system, said interrupt handling being responsive to said status checking instruction. This has the advantage that the capture of the content of the volatile memory device may be triggered even in the absence of an explicit exception. By periodically executing the status checking instruction, an exception that has not yet lead to an interruption of a program running on the processing system may be captured.

In a preferred embodiment, the method further comprises storing the set of interrupt monitoring instructions in the non-volatile memory device prior to execution of said instruction flow. This ensures that the interrupt monitoring instructions cannot be corrupted by unintended write actions to the volatile memory, which may be responsible for the occurrence of the exception.

It may be advantageous to add an identification tag to the copy of the content of the volatile memory. This is particularly useful if more than more copy of the content of the volatile memory may be saved in the non-volatile storage device prior to interrogation of these copies. For instance, the identification tag may comprise at least one of global positioning information and a date stamp. The global positioning information is particularly useful if the processing system forms part of a device that may suffer a location-induced exception, such as a mobile communications device that may suffer an exception as a result of an unexpected loss of service. In this case, it is useful to be able to associate the copy of the volatile memory contents with the location, date and time of generation of the copy.

In an embodiment, the method further comprises transferring the copy of the content of the volatile memory from the non-volatile storage device to another location during reboot. This is for instance advantageous when the exception occurred in an application running on the processing system, as such applications typically do not facilitate investigation to a non-volatile storage device such as a flash memory. The transfer of the copy of the contents of the volatile memory to for instance a remote device or a file system accessible by the application, access to the crash data by e.g. a software developer is facilitated.

It is preferable that the method of the present invention further comprises disabling all instructions capable of altering the content of the volatile memory prior to copying the content of the volatile memory into the non-volatile storage device to ensure that the processing system cannot proceed to a reboot before the contents of the volatile memory have been saved onto the non-volatile storage device.

Embodiments of the method of the present invention may be made available on a computer-readable storage medium carrying a set of instructions for when executed on a computer processing system, carrying out the steps of the method. Non-limiting examples of such a computer-readable storage medium include a CD-ROM, DVD, memory stick, a network-accessible file server, e.g. an Internet server and so on.

According to another aspect of the present invention, there is provided a processing system comprising a volatile memory, a non-volatile storage device and an instruction set stored in at least one of the volatile memory and the non-volatile storage device, said instruction set comprising interrupt monitoring instructions for copying the content of the volatile memory into the non-volatile storage device upon occurrence of said interrupt. Such a processing system is capable of saving the contents of a volatile memory such as a RAM upon the occurrence of exception events that can be rectified by a processor-controlled reboot, i.e. reboots that are not identified by a watchdog hardware block if present in the processing system.

Preferably, the interrupt monitoring instructions for copying the content of the volatile memory into the non-volatile storage device upon occurrence of said interrupt are stored in the non-volatile storage device to protect these instructions from becoming corrupted.

The instruction set may further comprise a status checking instruction for flagging the occurrence of an interrupt in the instruction flow of the processing system, at least one of said interrupt monitoring instructions being responsive to said status checking instruction such that exceptions may be detected without requiring an explicit interrupt.

The processing system may further comprise data compression instructions for compressing the copy of the contents of the volatile memory prior to storing the copy in the non-volatile storage device to reduce the size of the volatile memory content copy in the non-volatile storage device.

In an embodiment, the processing system further comprises global positioning means, said global positions means being adapted to provide global positioning information as an information tag to the copy of the contents of the volatile memory. This is advantageous when the exception may be the result of a location-specific event, as previously explained.

The processing system of the present invention may be included in an electronic device, such as a mobile communications device. The electronic device may be adapted to forward the copy of the contents of the volatile memory from the non-volatile storage device to a remote device such as a remote server or host.

### BRIEF DESCRIPTION OF THE EMBODIMENTS

Embodiments of the invention are described in more detail and by way of non-limiting examples with reference to the accompanying drawings, wherein:
FIG. 1 schematically depicts an example embodiment of a processing system of the present invention; and
FIG. 2-4 depict respective flowcharts of various aspects and embodiments of the method of the present invention.

### DETAILED DESCRIPTION OF THE DRAWINGS

It should be understood that the Figures are merely schematic and are not drawn to scale. It should also be understood that the same reference numerals are used throughout the Figures to indicate the same or similar parts.

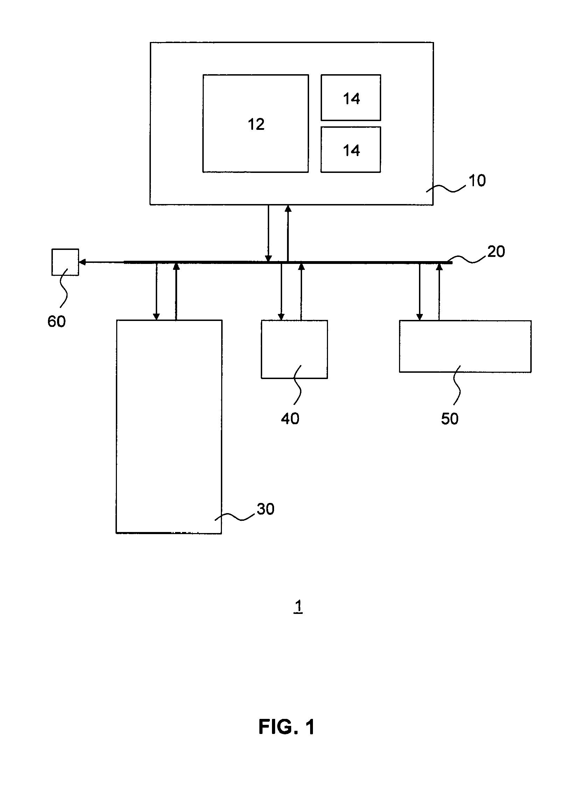

FIG. 1 schematically depicts an example embodiment of a processing system 1 of the present invention. The processing system 1 has a processor block 10 comprising a central processing unit 12, and, optionally, one or more co-processors 14. The processor block 10 is coupled to a shared data communication medium 20 such as a data communication bus, a network on chip or any other suitable data communication medium. In an alternative embodiment, the data communication medium 20 is a dedicated (peer-to-peer) data communication medium.

The processing system 1 further comprises a volatile memory 30 such as a RAM, and a non-volatile memory 40 such as a flash memory. In an embodiment, the volatile memory 30 is a distributed memory, with the CPU 12 and co-processors 14 communicating with separate parts of the distributed memory, e.g. different memory blocks.

The processing system 1 may further comprise one or more functional blocks 50, such as for example a GPS receiver for generating global position information. In an embodiment, the processing system 1 further comprises an output 60, which may be a wireless output, e.g. an antenna, in which case the processing system 1 may comprise transceiver functionality for communicating with the output 60.

It is pointed out that the functionality of the processing system 1 is of no particular relevance to the present invention. The processing system 1 may have any suitable complexity, such as an integrated circuit having a CPU, or may be a system-on-chip comprising a plurality of functional blocks, which for instance may comprise transceiver functionality as previously mentioned.

The processing unit typically comprises different layers of instructions. At the lowest level, there are the instructions executed by the CPU 12, which for instance facilitate the CPU 12 to access the volatile memory 30 and/or control one or more of the functional blocks 50. At an intermediate level, application software may be provided. Such software, when executed, typically has no direct access to the hardware resources of the processing system 1, but instead for instance uses an internal file system for mapping onto the hardware resources such as the volatile memory 30. For instance, the low-level instructions may comprise a JAVA virtual machine that allows application software written in JAVA to be executed by the processor block 10.

An operating system may also be provided in case of the processing system 1 being required to execute multiple applications. It is however noted that the presence of an operating system is not an essential requirement of the present invention.

In accordance with the present invention, the low-level instruction set of the processor block 10 comprises instructions capable of detecting the occurrence of an interrupt or exception, for instance by the execution of an interrupt handler. In operation, these instructions cause the content of the volatile memory 30 relevant to the state of the processor block 10 to be copied to the non-volatile memory 40, after which a controlled reboot of the processing system 1 is initiated. In an embodiment, these instructions may be a part of an interrupt handler, sometimes also referred to as interrupt service routine.

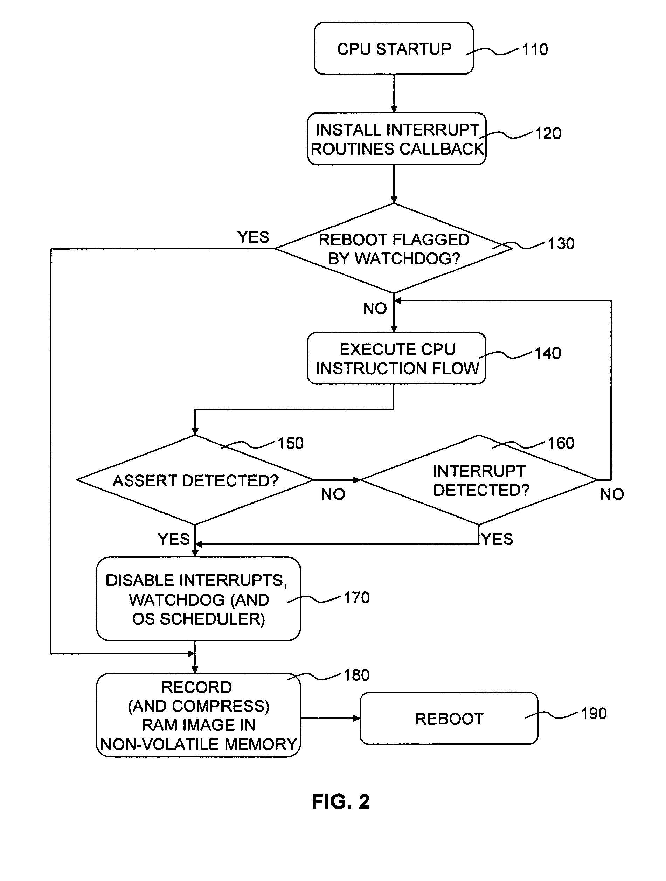

This will be explained in more detail with the aid of FIG. 2, which depicts a non-limiting example of an embodiment of the method of the present invention. In step 110, the central processing unit of a processing system of the present invention is powered up, after which the interrupt monitoring instructions, e.g. interrupt callback routines are installed in step 120. In a preferred embodiment, these instructions are loaded into a protected part, e.g. a designated read-only part of the non-volatile memory 40 to ensure that corruption of these instructions by a misdirected write instruction is avoided.

The method proceeds to step 130, in which it is checked if the watchdog hardware block (not shown in FIG. 1) has detected a reboot of the processing system 1. As previously explained, the watchdog hardware block typically detects reboots caused by the processor block 10 becoming deadlocked, incapable of executing instructions.

If the watchdog hardware block has detected a reboot of the processing system 1, the method proceeds to step 180 in which the contents of the volatile memory 30, e.g. a RAM, is copied to a non-volatile destination, preferably non-volatile memory 40, which may be the system flash, subject to the non-volatile destination having sufficient capacity, as will be explained in more detail later. In an alternative embodiment, not shown in FIG. 2, following a dump of the contents of the volatile memory 30 triggered by the watchdog hardware block, it may be decided to abort the reboot of the processing system 1, or adjust the reboot procedure, for instance to reboot the processing system 1 in a special mode, e.g. a safe mode or a debug-enable mode.

In a preferred embodiment, the instructions responsible for copying the contents of the volatile memory 30, e.g. a RAM, is copied to the non-volatile memory 40 cannot dynamically allocate memory addresses to the copy of the contents of the volatile memory 30 to avoid corruption of the non-volatile memory 40 in case of an incorrect memory address allocation. Instead, the non-volatile memory 40 preferably comprises a fixed address range assigned to storage of the copy of the contents of the volatile memory 30.

In case of the absence of a watchdog hardware block, or in case of the absence of a detected reboot of the processing system 1 by the watchdog hardware block, the method proceeds to step 140, in which the CPU 12 and co-processors 14 if present execute an instruction flow, as for instance triggered by a software application program running on the processor block 10.

In an embodiment, the instruction flow may have been amended by the periodic insertion of status checking instructions, e.g. asserts, which may check if a processor state value is within designed boundaries. For instance, it may be checked if an address in the volatile memory 30 to which a pointer of the processor block 10 points lies within a predefined address range. Hence, the assert instructions perform sanity checks of the processor state, which, upon the detection of an unexpected assertion, may trigger the method to proceed to step 170, which will be explained in more detail later.

In case of the absence of one or more status checking instructions in the instruction flow of the processor block 10, or in case of such status checking instructions not encountering an unexpected processor state, the method may proceed to step 160, in which the interrupt monitoring instructions check if the processor block 10 has encountered an interrupt instruction. Non-limiting examples of such interrupts include data value aborts, prefetch aborts and illegal address aborts. In the absence of the occurrence of such an interrupt, the method returns to step 140.

However, if an interrupt or exception has been detected, the method proceeds to step 170, in which the execution of the interrupt monitoring instructions ensures that all (other) interrupts are disabled to preserve the contents of the volatile memory 130 and prevent premature rebooting of the processing system 1. In an embodiment, the watchdog hardware block and the scheduler of the operating system, if present, may also be disabled for the same reasons. The method subsequently proceeds to step 180, in which the state of the volatile memory 130 is copied onto the non-volatile memory 140. Step 180 may further comprise storing the trigger of the occurrence of the exception or interrupt leading to the system reboot in the non-volatile memory 40, which aids the user, e.g. a software developer to quickly identify the problem in the application software.

The system may subsequently be rebooted in step 190. Following reboot, a user such as a software programmer may access the saved copy of the contents of the volatile memory 30 to determine the cause of the exception leading to the reboot of the processing system 1. This will be explained in more detail later.

At this stage, it is noted that the check performed in step 150 may be for the purpose of detecting an assert in the software running on the processor block 10, whereas the check performed in step 160 may be for the purpose of detecting an assert in the hardware of the processing system 1. As an example, a software assert may be inserted into the software code when a memory overflow problem has been detected such that the assert can aid detecting which part of the code is responsible for the memory overflow. Such an assert is comparable to a breakpoint used when debugging a computer program.

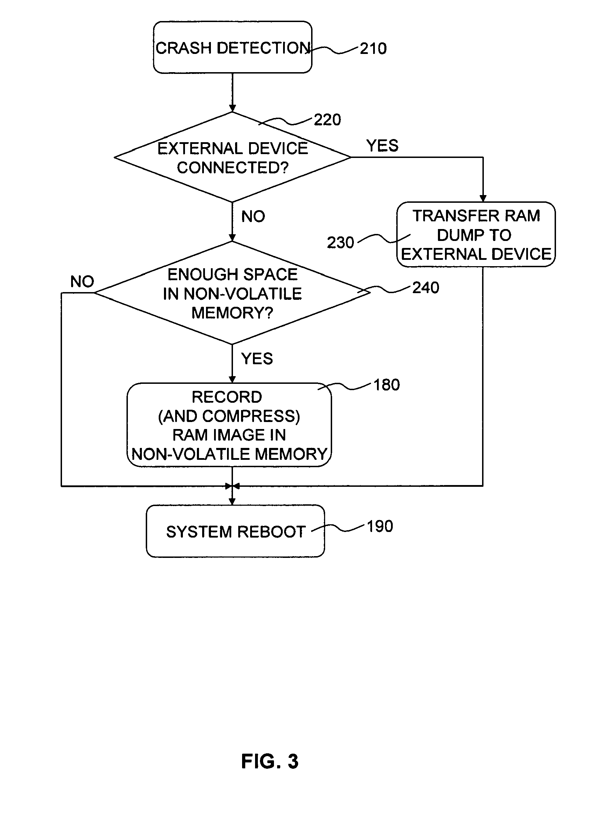

In an alternative embodiment of the present invention, shown in FIG. 3, an exception occurring in the instruction flow of the processor block 10 may lead to the generation of the copy of the contents of the volatile memory 30 as previously explained. However, in this embodiment, it is checked in step 220 if the processing system 1 is connected to an external device, such as a computer connected to the processing system 1, e.g. via output 60 for debugging the operation of the processing system 1. The output 60 may be connected to the external device in any suitable manner, e.g. using a UART (universal asynchronous receiver/transmitter). If the presence of such an external device is detected, the relevant contents of the volatile memory 30 are copied to the external device in step 230 instead, after which the processing system 1 may be allowed to reboot in step 190.

In the absence of the external device, as checked in step 220, the method proceeds to step 240, in which it is checked if the non-volatile memory 40 has sufficient available capacity to receive a copy of the contents of the volatile memory 30. In case of sufficient capacity, the method proceeds to the previously explained step 180. In case of the non-volatile memory 40 having insufficient capacity, the method skips step 180 and proceeds directly to step 190 in which the system is rebooted. It will be appreciated that in the latter scenario, the contents of the volatile memory 30 will be lost during reboot.

In order to reduce the risk that the available capacity of the non-volatile memory 40 is insufficient, the copy of the contents of the volatile memory 30 may be compressed prior to writing it into the non-volatile memory 40. Any suitable compression algorithm may be used. Such algorithm may be made available in hardware, e.g. in the form of a functional block 50, or in software, with the interrupt monitoring instructions being adapted to call the compression algorithm upon the detection of the exception or interrupt.

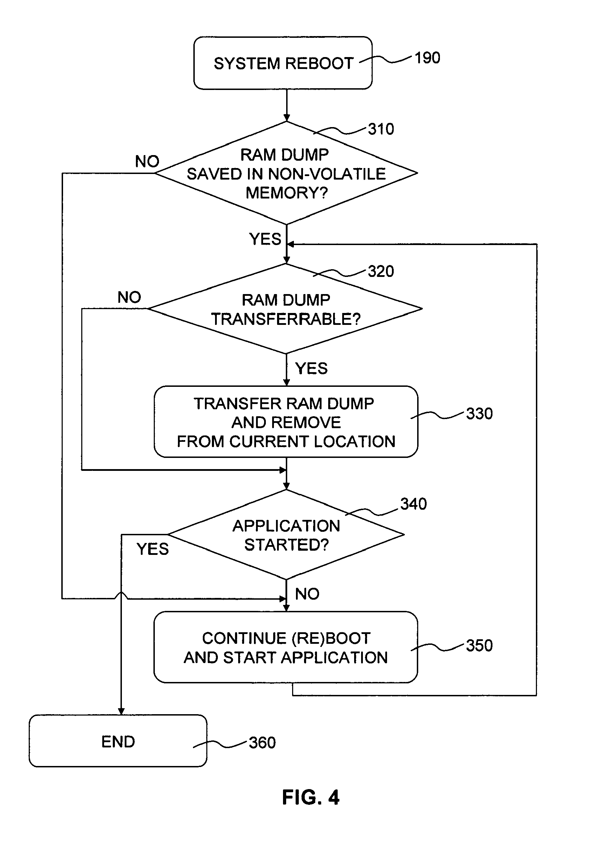

As previously explained, in case of a software application causing the reboot of the processing system 1, the user may not be able to directly access the copy of the contents of the volatile memory 30 stored in the non-volatile memory 40 because the software application cannot directly access the non-volatile memory 40. This problem may be solved in the following manner, as shown in FIG. 4. Upon system reboot, the processor block 10 may check if the non-volatile memory 40 contains a copy of the contents of the volatile memory 30, either in compressed or uncompressed form. If no copy is present, the method may proceed to step 350 in which the reboot is continued and the relevant software application running on the processing system is loaded.

However, if a copy of the contents of the volatile memory 30 is detected in the non-volatile memory 40, it is checked in step 320 if this copy is transferrable to another location, such as the local file system of the software application to be launched. If such a transfer may be made, the method proceeds to step 330 in which the transfer is completed, after which the copy of the contents of the volatile memory 30 is removed from the non-volatile memory 40. The transfer may be made in any suitable manner, e.g. in response to manually entered commands or automatically instead. If it is decided in step 320 that the copy of the contents of the volatile memory 30 cannot be made, the method may proceed to step 350 in which the reboot of the processing system 1 including the launch of the software application is completed in step 350.

In an embodiment, following the launch of the application in step 350 and the transfer of the contents of the volatile memory 30 from the non-volatile memory 40 into e.g. the local file system of the software application, the method may revert back to step 320 to once more check if the copy of the contents of the volatile memory 30 that is accessible to the software application may be transferred to another, e.g. remote location, for instance through wireless communication with a remote device. Such a transfer is for instance beneficial if the processing system 1 forms part of a mobile communications device that has encountered an unexpected reboot whilst in a remote location. In such a scenario, the copy of the contents of the volatile memory 30 may be transferred to e.g. a (central) server to allow the developer of the application software to debug the application such that a patch or upgrade of the application software can be made available to the user of the mobile communications device.

In case of such a transfer connection being available, the method proceeds to step 330 in which the copy of the contents of the volatile memory 30 that is accessible to the software application is transferred to the further location, e.g. an external device as previously explained, after which the contents of the volatile memory 30 that is accessible to the software application may be deleted.

If the contents of the volatile memory 30 that is accessible to the software application cannot be transferred, the method may proceed to step 360 in which the method is ended. It is noted that step 340 is only present for the sake of clarity, i.e. to be able to simplify the flowchart of FIG. 4, such that the steps 320 and 330 when executed by the application software do not have to be shown as separate steps. It is noted that the method of the present invention does not require an actual check of whether or not the software application has been fully launched.

At this point, it is emphasized that it may be advantageous to attach additional information to the copy of the contents of the volatile memory 30. For instance, in the above example of the mobile communications device suffering an unexpected reboot at a remote location, additional information such as date, time and location of the occurrence of the reboot may provide invaluable insights to the software developer in determining the cause of the reboot. For instance, the reboot may have been caused by the mobile communications device switching cells, with an antenna signal of the destination cell being temporarily unavailable. Hence, upon the processor block 10 making the switch to the destination cell and subsequently failing to lock onto the antenna signal of that cell, the processing system 1 may be forced to make a controlled reboot in order to reconnect the mobile communications device to an available antenna signal. For this reason, it can be beneficial to attach an information tag to the contents of the volatile memory 30, such as a time stamp and/or global positioning information generated by a global positioning system, which may be realized in any suitable manner, e.g. in the form of hardware and/or software.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A method of capturing the contents of a volatile memory (30) of a processing system (1), the processing system further comprising a non-volatile storage device (40), the method comprising:
providing a set of interrupt monitoring instructions for copying the content of the volatile memory into the non-volatile storage device upon occurrence of said interrupt;
upon detection of the interrupt in the instruction flow of the processing system, executing the corresponding interrupt monitoring instruction from said set; and
rebooting the processing system (1) following said copying.

2. The method of claim 1, further comprising compressing the content of the volatile memory (30) prior to copying said content into the non-volatile storage device (40).

3. The method of claim 1, further comprising executing a status checking instruction for flagging the occurrence of an interrupt in the instruction flow of the processing system (1), said interrupt monitoring instruction further being responsive to said status checking instruction.

4. The method of any of claims 1-3, further comprising storing the set of interrupt monitoring instructions in the non-volatile memory device (40) prior to execution of said instruction flow.

5. The method of any of claims 1-4, further comprising adding an identification tag to the copy of the content of the volatile memory (30).

6. The method of claim 5, wherein the identification tag comprises at least one of global positioning information and a date stamp.

7. The method of any of claims 1-6, further comprising transferring the copy of the content of the volatile memory (30) from the non-volatile storage device (40) to another location during reboot.

8. The method of any of claims 1-7, further comprising disabling all instructions capable of altering the content of the volatile memory (30) prior to copying the content of the volatile memory into the non-volatile storage device (40).

9. A computer-readable storage medium carrying a set of instructions for when executed on a computer processing system (1), carrying out the steps of the method of any of claims 1-8.

10. A processing system (1) comprising a volatile memory (30), a non-volatile storage device (40) and an instruction set stored in at least one of the volatile memory and the non-volatile storage device, said instruction set comprising interrupt monitoring instructions for copying the content of the volatile memory into the non-volatile storage device upon occurrence of said interrupt.

11. The processing system (1) of claim 10, wherein the interrupt monitoring instructions for copying the content of the volatile memory (30) into the non-volatile storage device (40) upon occurrence of said interrupt are stored in the non-volatile storage device.

12. The processing system (1) of claim 10 or 11, wherein the instruction set further comprises a status checking instruction for flagging the occurrence of an interrupt in the instruction flow of the processing system, at least one of said interrupt monitoring instructions being responsive to said status checking instruction.

13. The processing system (1) of any of claims 10-12, further comprising data compression instructions for compressing the copy of the contents of the volatile memory (30) prior to storing the copy in the non-volatile storage device (40).

14. The processing system (1) of any of claims 10-13, further comprising global positioning means (50), said global positions means being adapted to provide global positioning information as an information tag to the copy of the contents of the volatile memory (30).

15. An electronic device comprising the processing system (1) of any of claims 10-14.
